# EUROPÄISCHE PATENTSCHRIFT

(11) **EP 0 383 094 B1**
(45) Veröffentlichungstag und Bekanntmachung des Hinweises auf die Patenterteilung: **17.08.1994**
(21) Anmeldenummer: 90101881.2
(22) Anmeldetag: 31.01.1990
(51) Int. Cl.: G01C 21/20, G09B 29/10, G11B 17/22, G11B 27/28

(54) **Verfahren und Vorrichtung zum Lesen von Navigationsdaten einer Compact-Disc**
Method and apparatus for reading navigation data from a compact-disc
Procédé et dispositif de lecture de données de navigation d'un disque laser

(30) Priorität: 14.02.1989 DE 3904344
(43) Veröffentlichungstag der Anmeldung: 22.08.1990
(73) Patentinhaber: ROBERT BOSCH GMBH, 70442 Stuttgart (DE)
(72) Erfinder: Tempelhof, Alfred, Dipl.-Ing., D-3200 Hildesheim (DE)

(56) Entgegenhaltungen:
- EP-A- 0 200 706
- DE-A- 3 700 995
- BOSCH TECHNISCHE BERICHTE, vol. 8, no. 1/2, 1986, Seiten 12-14; E.-P. Neukirchner et al

## Beschreibung

### Stand der Technik

Die Erfindung geht aus von einem Verfahren zum Einlesen von Navigationsdaten für ein Ortungs- und Navigationssystem nach der Gattung des Hauptanspruchs.

Aus Bosch Technische Berichte (Band 8, 1986, Heft 1/2, Seite 13, 14) ist eine Compact-Disk (CD) bekannt, auf der Daten von Straßenplänen abgespeichert sind. Es ist vorgesehen, daß die CD-Daten dieser Navigations-Compact-Disk von einem in einem Kraftfahrzeug eingebauten CD-Spieler ausgelesen und zum Ortungs- und Navigationssystem übertragen werden.

Es sind weiter CD-Wechsler bekannt, die in ihrem Magazin mehrere Compact-Disketten abspielbereit halten, auf die der CD-Wechsler wahlweise zugreifen kann. Beim Anfordern der Daten einer Navigations-Compact-Disk wird sofort das Auslesen der momentan laufenden Compact-Disk, z.B. einer Audio-CD, beendet und die Wiedergabe beispielsweise eines Musikstücks unterbrochen.

Aus der EP-A-0 200 706 ist ein CD-Wechsler für mehrere CDs bekannt, die neben Musik- oder Videodaten auch Navigationsinformationen enthalten. Bei Anforderung von Navigationsdaten wird eine laufende Musik-CD unterbrochen und auf die Navigations-CD umgeschaltet. Der CD-Wechsler speichert die Position der unterbrochenen laufenden Audio-CD ab, so daß nach dem Auslesen der Navigations-CD auf die vorherige Audio-CD Zurückgeschaltet und das Auslesen an der Unterbrechungsstelle fortgesetzt werden kann. Die Unterbrechung der laufenden Audio-CD erfolgt jeweils bei Anforderung von Navigationsdaten und an beliebiger Stelle, so daß die Unterbrechung als störend empfunden werden kann. Auch kann die Anzahl der Unterbrechungen relativ häufig sein, wenn beispielsweise bei einem großen Kartenmaßstab und hoher Geschwindigkeit die Kartendaten schnell abgearbeitet werden.

### Vorteile der Erfindung

Das erfindungsgemäße Verfahren zum Lesen von Navigationsdaten einer Compact-Disk mit den Merkmalen des Hauptanspruchs hat demgegenüber den Vorteil, daß zum Abspielen sowohl der Audio-Compact-Disk als auch der Navigations-Compact-Disk ein CD-Wechsler verwendet wird. Dabei ist besonders vorteilhaft, daß das Einlesen von Navigationsdaten der Navigations-Compact-Disk lediglich in den Abspielpausen einer Audio-Compact-Disk erfolgt. Störende Unterbrechungen während des Abspielens einer Audio-Compact-Disk, die dadurch entstehen, daß der CD-Wechsler auf Anforderung des Ortungs- und Navigationssystems sofort auf die Navigations-Compact-Disk umschaltet, werden dadurch vermieden.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist, daß die Erkennung einer Abspielpause, beispielsweise nach Beendigung eines Musikstückes, durch Auswerten der gelesenen digitalen Daten oder des am Verstärker abgreifbaren NF-Signals erfolgt. Diese Auswertung ist beispielsweise durch eine einfache Integratorschaltung durchführbar.

Um längere Abspielpausen optimal nutzen zu können, ist es vorteilhaft, wenn die Daten der Navigations-Compact-Disk (4) durch präventive Lesezyklen in einen Speicher, beispielsweise einen RAM-Speicher, des Ortungs- und Navigationssystems eingelesen werden . Die Daten sind aus dem RAM-Speicher schnell auslesbar und stehen damit in vorteilhafter Weise dem Ortungs- und Navigationssystem bei Bedarf sofort zur Verfügung.

Da die Pausenerkennung insbesondere bei Sprachtexten unter Umständen schwierig ist, ist es vorteilhaft, wenn die in den Zusatzspuren (Subheader) der Compact-Disk enthaltenen Laufzeitinformationen vom CD-Wechsler ausgewertet werden. Durch auf der Compact-Disk enthaltene Zusatzinformationen läßt sich die Restlaufzeit eines Musikstückes ermitteln. Nach Ablauf der Restlaufzeit wird zum Einlesen von Navigationsdaten auf die Navigations-Compact-Disk umgeschaltet.

Ein weiterer Vorteil besteht darin, daß die Audio-Compact-Disk nach dem Einlesen der Navigationsdaten wieder an der Abbruchstelle gestartet wird. Dadurch wird die Spielpause kaum als störende Unterbrechung empfunden.

Auch ist vorteilhaft, wenn nach einer Abspielpause, insbesondere, wenn die Abspielpause sehr lang ist, das unterbrochene Musikstück der Audio-Compact-Disk von Beginn an wiederholt wird. Dadurch kann das Musikstück im ganzen gehört werden.

Weitere Vorteile des erfindungsgemäßen Verfahrens zum Einlesen von Navigationsdaten sind in der Beschreibung näher erläutert.

### Zeichnung

Ein Ausführungsbeispiel der Erfindung ist in der Zeichnung dargestellt und in der nachfolgenden Beschreibung näher erläutert. Es zeigt Figur 1 ein Blockschaltbild des Ausführungsbeispiels, Figur 2 die Spuren-Organisation auf der Compact-Disk und Figur 3 ein Flußdiagramm.

### Beschreibung des Ausführungsbeispiels

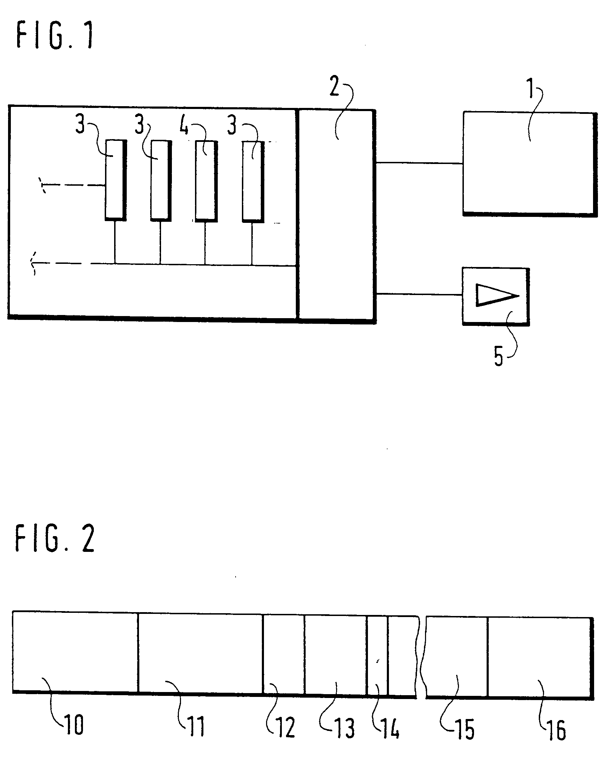

In Figur 1 ist als Blockschaltbild ein Ortungs- und Navigationssystem 1 dargestellt, das über Datenleitungen mit einem CD-Wechsler 2 verbunden ist. Der CD-Wechsler 2 beinhaltet mehrere Audio-Compact-Disketten 3 sowie eine Navigations-Compact-Disk 4. Weiterhin ist der CD-Wechsler 2 mit einem Verstärker 5 verbunden.

Im folgenden wird die Wirkungsweise dieses Ausführungsbeispiels beschrieben.

Der CD-Wechsler 2 arbeitet wie ein handelsüblicher CD-Spieler mit dem Unterschied, daß er mehrere Compact-Disketten 3, 4 abspielbereit in seinem Magazin hat. Das Auflegen und Wechseln der Compact-Disketten 3, 4 erfolgt automatisch und ohne manuelle Einflußnahme durch den Bediener. Auf dem CD-Wechsler 2 sind Tasten oder Schalter angebracht, mit denen eine bestimmte Compact-Disc 3 bzw. ein Musiktitel angewählt wird. Nach dem Anwählen des Musiktitels legt der CD-Wechsler 2 die gewünschte Audio-Compact-Disk in seinen Abspielschacht und fährt mit seinem Lesekopf auf den Anfangspunkt der Spur (Track) des programmierten Musiktitels. Eine Audio-Compact-Disk kann bekanntermaßen bis zu 99 Spuren aufweisen, auf die Musikstücke abspeicherbar sind. Zusätzlich sind auf der Compact-Disk in Zusatzspuren (Subheader) Informationen gespeichert, die die Verwaltung und Steuerung der laufenden Compact-Disk sicherstellen. So wird in einer Zusatzspur (Subcode-Channel-P) geprüft, ob momentan eine Abspielpause vorliegt. Dagegen liefert eine weitere Zusatzspur (SubcodeChannel-Q) die Information, wie lang die Spieldauer in der momentan laufenden Spur gewesen ist. Aus der Gesamtspieldauer und der bereits abgespielten Dauer wird die noch verbleibende Spieldauer bis zu einer Pause errechnet.

Aus Figur 2 ist ersichtlich, daß zwischen den Spuren 11, 13, 15 jeweils eine Abspielpause 12, 14 von mindestens zwei Sekunden vorgesehen ist. Vor der ersten Spur 11 ist eine Zone (Lead-In-Area) 10 vorgesehen, in der unter anderem die Daten für die einzelnen Positionen der Spuren 11, 13, 15 abgespeichert sind. Mit Hilfe dieser Daten läßt sich die restliche Spieldauer bis zu der nächsten Pause errechnen. In Zone 16 wird das Datenende erreicht.

Will nun das Ortungs- und Navigationssystem 1 Navigationsdaten von der Navigations-Compact-Disk 4 eingelesen haben, dann sendet es einen entsprechenden Lesebefehl an den CD-Wechsler 2. Um zu vermeiden, daß der Lesekopf des CD-Wechslers 2 - unabhängig von seiner momentanen Abspielposition auf der Audio-Compact-Disc 3 - das Auslesen der Daten sofort stoppt und das laufende Musikstück unterbricht, wird der Lesebefehl verzögert. Er wird so lange verzögert, bis eine Abspielpause vorhanden ist, d.h. bis die laufende Spur bis zu ihrem Ende abgespielt wurde. Da die restliche Abspielzeit der laufenden Spur, wie oben dargestellt wurde, bekannt ist, ist die Verzögerung des Lesebefehls bis zum Abspielende mit einfachen und bekannten Mitteln durchführbar. In dieser Abspielpause wird auf die Navigations-Compact-Disk 4 umgeschaltet. Solange die Daten von der Navigations-Compact-Disk 4 noch eingelesen werden, ist das Abspielen einer neuen Audio-Compact-Disk 3 blockiert. Erst nachdem das Ende der einzulesenden Daten erkannt wurde, wird auf die vorher in Betrieb gewesene Audio-Compact-Disk 3 zurückgeschaltet. In weiterer Ausgestaltung der Erfindung ist es vorgesehen, das letzte Musikstück von Anfang an zu wiederholen. Ist dies nicht gewünscht, dann wird mit dem Abspielen der nächsten Spur und dem nächsten Musikstück fortgefahren.

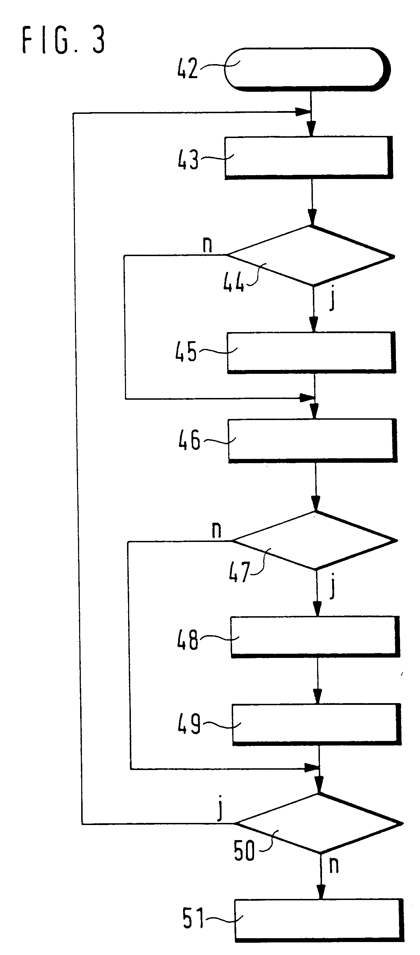

In Figur 3 ist dieser Ablauf in einem Flußdiagramm dargestellt. Nach dem Startbefehl in Position 42 lädt der CD-Wechsler 2 die gewünschte Audio-Compact-Disk 3 und spielt in Position 43 das gewünschte Musikstück bis zur Pause in Position 46 ab. Wird zwischenzeitlich vom Navigationssystem 1 ein Befehl zur Datenanforderung (Position 44) abgegeben, dann setzt der CD-Wechsler 2 einen Merker in Position 45. Im anderen Fall wird diese Position übersprungen.

Wurde zu Beginn der Abspielpause in Position 46 ein gesetzter Merker erkannt (Position 47), dann wird in Position 48 die Navigations-CD geladen und die angeforderten Daten in das Navigationssystem eingelesen.

In Position 49 wird nach Beendigung des Dateneinlesens die vorherige Audio-CD geladen und in Position 50 nach dem nächsten Musiktitel abgefragt. Wird ein neues Musikstück gewünscht, beginnt der Durchlauf wieder in Position 43, im anderen Fall ist in Position 51 das Abspielen der Audio-CD beendet.

Das Ortungs- und Navigationssystem 1 kann nicht immer bis zur nächsten Abspielpause der Audio-CD 3 warten. Es ist daher vorgesehen, in den Abspielpausen bereits Daten der Navigations-CD 4 in präventiven Lesezyklen in einen Speicher des Ortungs- und Navigationssystems 1 einzulesen, auch wenn sie momentan noch nicht benötigt werden. Wird beispielsweise der erste Teil des Straßenplans, der auf dem Monitor des Ortungs- und Navigationssystems 1 dargestellt ist, entlang der eingegebenen Fahrtroute abgefahren, dann kann der in Richtung des Fahrtziels anschließende Straßenplan in den Speicher des Ortungs- und Navigationssystems 1 eingelesen werden. Kurz vor dem Ende des ersten Straßenplanes wird anschließend oder überlappend auf den nächsten Straßenplan umgeschaltet, wobei die benötigten Daten nun direkt dem Speicher des Ortungs- und Navigationssystems 1 zu entnehmen sind. Das Umschalten ist durchführbar ohne die evtl. laufende Audio-CD 3 zu unterbrechen.

In weiterer Ausgestaltung der Erfindung kann das Ortungs- und Navigationssystem 1 eine Vorbereitungsmeldung an den CD-Wechsler 2 senden, damit dieser bei der nächsten Gelegenheit Daten von der Navigations-CD einliest. Zur Vorbereitungsmeldung werden unterschiedliche Signale gesendet, die je nach Dringlichkeit vom CD-Wechsler 2 zu berücksichtigen sind. Als Dringlichkeitsindikator kann der Restweg des noch nicht abgefahrenen Kartenteils und/oder die Fahrzeuggeschwindigkeit verwendet werden. Dabei ist die größte Dringlichkeit dann gegeben, wenn die Fahrtstrecke auf dem dargestellten Straßenplan abgefahren ist.

Bei der größten Dringlichkeitsstufe wird das laufende Musikstück sofort unterbrochen und die Daten-CD zum Einlesen der Navigationsdaten geladen. Da die Abbruchposition gespeichert wird, kann später das unterbrochene Musikstück an der Abbruchstelle fortgesetzt abgespielt werden.

Ein weiteres Verfahren zur Auswertung der Pausenerkennung ist durch die Auswertung des NF-Signals gegeben. Durch Überwachung des Ausgangssignals, das beispielsweise von dem an den CD-Wechsler 2 angeschlossenen NF-Verstärker 5 abgreifbar ist, ist leicht feststellbar, ob eine Abspielpause vorliegt. Da nicht bei jeder Abspielpause auf die Navigations-Compact-Disk 4 umgeschaltet werden kann, ist es zweckmäßig, eine gewisse Mindestzeit zur Detektion der Pause einzustellen. Erst nach Überschreiten der Mindestpausenzeit wird die Audio-Compact-Disk 3 unterbrochen und auf die Navigations-Compact-Disk 4 umgeschaltet. Auch bei Auswertung des NF-Signals ist eine kontinuierliche Messung beispielsweise des Pegels erforderlich, um eine Pause eindeutig erkennen zu können. Die Messung des NF-Signals ist nicht Gegenstand der Erfindung, da deren technische Realisierung dem Fachmann bekannt ist.

## Patentansprüche

1. Verfahren zum Einlesen von Daten für ein Ortungs- und Navigationssystem (1) von einer Compact-Disc (CD, 3, 4) eines in einem Kraftfahrzeug befindlichen CD-Wechslers (2), der auswählbare Audio-CDs (3) und wenigstens eine Navigations-CD (4) abspielbereit in seinem Magazin hat, auf der die Daten für das Ortungs- und Navigationssystem (1) gespeichert sind, wobei während des Auslesens einer laufenden Audio-CD (3) vom Ortungs- und Navigationssystem (1) ein ankommender Lesebefehl zum Auslesen von Navigationsdaten das Auslesen der laufenden Audio-CD (3) unterbricht, dabei die letzte Ausleseposition gespeichert und die Navigations-CD (4) zum Auslesen angewählt wird, dadurch gekennzeichnet, daß der Lesebefehl zum Auslesen der Navigations-CD (4) so lange verzögert wird, bis sich die laufende Audio-CD (3) in einer Abspielpause befindet und daß nach dem Umschalten auf die Navigations-CD (4) deren Daten präventiv ausgelesen und in einem Speicher des Ortungs- und Navigationssystems (1) abgespeichert werden.

2. Verfahren nach Anspruch 1, dadurch gekennzeichnet, daß die Erkennung von Abspielpausen (12, 14) durch Auswertung der ausgelesenen CD-Daten oder eines entsprechenden NF-Signals erfolgt.

3. Verfahren nach Anspruch 1, dadurch gekennzeichnet, daß die Erkennung von Abspielpausen (12, 14) durch Auswertung der in Zusatzspuren (Subchannels) enthaltenen Daten, vorzugsweise durch Subtraktion der Abspielzeit einer Spur (11, 13, 15) von der Gesamtspielzeit dieser Spur erfolgt.

4. Verfahren nach einem der vorhergehenden Ansprüche, dadurch gekennzeichnet, daß nach dem Lesen der Navigations-Compact-Disk (4) auf die vorher in Betrieb gewesene Audio-Compact-Disk (3) zurückgeschaltet und der Lesekopf des CD-Wechslers (2) auf die gespeicherte Position aufgesetzt wird.

5. Vorrichtung mit einem Ortungs- und Navigationssystem (1) und einem CD-Wechsler (2) in einem Kraftfahrzeug, der mehrere Audio-Compact-Discs (CD, 3, 4) und wenigstens eine Navigations-Compact-Disc (4) abspielbereit in einem Magazin des CD-Wechslers (2) enthält und auf der die Daten für das Ortungs- und Navigationssystem (1) aus lesbar sind, wobei während des Auslesens einer laufenden Audio-CD (3) ein ankommender Lesebefehl zum Auslesen von Navigationsdaten das Auslesen der laufenden Audio-CD (3) unterbricht, dabei die letzte Ausleseposition gespeichert und die Navigations-CD (4) zum Auslesen angewählt wird, dadurch gekennzeichnet, daß der CD-Wechsler (2) ausgebildet ist, nur in einer Abspielpause (12, 14) einer Audio-Compact-Disk (3) auf die Navigations-Compact-Disk (4) umzuschalten.

## Claims

1. Method for reading in data for a position-finding and navigation system (1) from a compact disc (CD, 3, 4) of a CD changer (2) which is located in a motor vehicle and has, ready to play, in its magazine selectable audio CDs (3) and at least one navigation CD (4), on which the data for the position-finding and navigation system (1) are stored, in which method, during the reading-out of a running audio CD (3), an incoming read command from the position-finding and navigation system (1) for reading out navigation data interrupts the reading-out of the running audio CD (3), in which case the last read-out position is stored and the navigation CD (4) is selected for reading out, characterized in that the read command for reading out the navigation CD (4) is delayed until the running audio CD (3) is in a play pause and in that, after switching over to the navigation CD (4), the data of the latter are preventively read out and stored in a memory of the position-finding and navigation system (1).

2. Method according to Claim 1, characterized in that the detection of play pauses (12, 14) takes place by evaluating the read-out CD data or a corresponding AF signal.

3. Method according to Claim 1, characterized in that the detection of play pauses (12, 14) takes place by evaluating the data contained in additional tracks (subchannels), preferably by subtraction of the playing time of a track (11, 13, 15) from the total playing time of this track.

4. Method according to one of the preceding claims, characterized in that, after reading the navigation compact disc (4), a switch is made back to the audio compact disc (3) previously in operation and the read head of the CD changer (2) is set down onto the stored position.

5. Apparatus in a motor vehicle, having a position-finding and navigation system (1) and a CD changer (2) which contains, ready to play, in a magazine of the CD changer (2) a plurality of audio compact discs (CD, 3, 4) and at least one navigation compact disc (4), on which the data for the position-finding and navigation system (1) can be read out, in which apparatus, during the reading-out of a running audio CD (3), an incoming read command for reading out navigation data interrupts the reading-out of the running audio CD (3), in which case the last read-out position is stored and the navigation CD (4) is selected for reading out, characterized in that the CD changer (2) is designed to switch over to the navigation compact disc (4) only in a play pause (12, 14) of an audio compact disc (3).

## Revendications

1. Procédé de lecture de données pour un système de localisation et de navigation (1) à partir d'un disque compact (CD, 3, 4) d'un changeur de disques compacts CD (2) équipant un véhicule automobile, qui contient dans son magasin des disques compacts audio (3), susceptibles d'être choisis et au moins un disque compact de navigation (4), ce dernier contenant les données destinées au système de localisation et de navigation (1), et pendant la lecture d'un disque compact audio (3) un ordre de lecture émis par le système de localisation et de navigation (1) pour lire les données de navigation, interrompt la lecture du disque compact audio (3) en cours, en enregistrant la dernière position de lecture et en choisissant le disque compact de navigation (4) pour le lire, procédé caractérisé en ce que l'ordre de lecture du disque compact de navigation (4) est temporisé jusqu'à ce que le disque audio en cours de lecture (3) se trouve sur une pause de lecture et en ce qu'après avoir commuté vers le disque compact de navigation (4) on lit à titre préventif ces données pour les inscrire dans une mémoire du système de localisation et de navigation (1).

2. Procédé selon la revendication 1, caractérisé en ce que la détection des pauses de lecture (12, 14) se fait par exploitation des données de disque compact, lues ou d'un signal basse fréquence correspondant.

3. Procédé selon la revendication 1, caractérisé en ce que la détection des pauses de lecture (12, 14) se fait par exploitation des données contenues dans des pistes auxiliaires (Subchannels), de préférence par soustraction du temps de lecture d'une piste (11, 13, 15) du temps de lecture total de cette piste.

4. Procédé selon l'une des revendications précédentes, caractérisé en ce qu'après la lecture du disque compact de navigation (4) on repasse sur le disque compact audio (4) qui était utilisé précédemment et on met la tête de lecture du changeur de disques compacts (3) sur la position mise en mémoire.

5. Dispositif comportant un système de localisation et de navigation (1) et un changeur de disques compacts (2) équipant un véhicule automobile, avec plusieurs disques compacts audio (CD, 3, 4) et au moins un disque compact de navigation (4) prêt à être lu dans un magasin du changeur de disques compacts (2), le disque compact de navigation contenant les données destinées au système de localisation et de navigation (1), et pen dant la lecture d'un disque compact audio (3), un signal de lecture d'entrée pour lire les données de navigation interrompt la lecture du disque compact audio (3) en cours, avec enregistrement en mémoire de la dernière position de lecture et sélection du disque compact de navigation (4) pour la lecture, dispositif caractérisé en ce que le changeur de disques compacts (2) est réalisé pour ne commuter sur le disque compact de navigation (4) que dans une pause de lecture (12, 14) d'un disque compact audio (3).
